# EUROPÄISCHE PATENTSCHRIFT

(11) **EP 3 201 060 B1**
(45) Veröffentlichungstag und Bekanntmachung des Hinweises auf die Patenterteilung: **12.12.2018**
(21) Anmeldenummer: 15771964.2
(22) Anmeldetag: 01.10.2015
(51) Int. Cl.: B61D 33/00

(54) **SITZSCHALE UND VERFAHREN ZUR HERSTELLUNG EINER SITZSCHALE**
SEAT SHELL AND METHOD FOR PRODUCING A SEAT SHELL
COQUE DE SIÈGE ET PROCÉDÉ DE FABRICATION D'UNE COQUE DE SIÈGE

(30) Priorität: 01.10.2014 DE 102014219984
(43) Veröffentlichungstag der Anmeldung: 09.08.2017
(73) Patentinhaber: Bombardier Transportation GmbH, 10785 Berlin (DE)
(72) Erfinder: SCHILLINGS, Dirk, 02681 Crostau (DE); DANIEL, André, 01877 Bischofswerda (DE); FICHTL, Holger, 01239 Dresden (DE); SCHULZE, Ernst-Eckart, 01156 Dresden (DE)
(74) Vertreter: Patentanwälte Bressel und Partner mbB
(86) Internationale Anmeldenummer: PCT/EP2015/072682
(87) Internationale Veröffentlichungsnummer: WO 2016/050908

(56) Entgegenhaltungen:
- EP-A1- 1 332 914
- EP-A1- 2 366 584
- DE-A1-102011 084 331
- FR-A- 1 104 277
- US-A- 3 329 463
- US-A- 5 655 816

## Beschreibung

Die vorliegende Erfindung betrifft eine Sitzschale, die insbesondere für einen Fahrzeugsitz geeignet ist, aufweisend ein Profilelement mit einem Rückenlehnenbereich und einem davon abgewinkelten Sitzflächenbereich, einen Sitz, der eine solche Sitzschale aufweist, ein Schienenfahrzeug, das einen solchen Sitz aufweist, sowie ein Verfahren zur Herstellung der Sitzschale.

Aus der EP 1705093 A2 ist ein Fahrgastsitz mit einer Sitzfläche und einer Rückenlehne bekannt, wobei eine sich über den Bereich der Sitzfläche und der Rückenlehne erstreckende Sitzschale vorgesehen ist. Die Sitzschale ist von wenigstens einem in Längsrichtung einstückig ausgebildeten Hohlprofil gebildet. Zur Befestigung eines Polsters sind Profilteile jeweils mit einer Nut bzw. einem Keder ausgebildet, in welche(s) entsprechende Verriegelungsglieder des Polsters eingeführt oder verrastet sind.

Die DE 102011084331 A1 offenbart einen Fahrgastsitz mit einer Sitzfläche und einer Rückenlehne, welche zwei Seitenholme aufweist, wobei die Seitenholme durch Spritzgießen und anschließendes Ausblasen des Kernbereichs hergestellt sind und jeweilige innere Hohlräume aufweisen. Ferner offenbart diese Offenlegungsschrift einen Fahrgastsitz mit einer Sitzfläche, einer Rückenlehne und einem an der Sitzfläche angebrachten Sitzpolster, wobei das Sitzpolster mittels wenigstens zweier Rastverbindungen mit der Sitzfläche verbunden ist.

Die EP 1 332 914 A1 offenbart einen Fahrzeugsitz, der eine Tragstruktur aufweist, sowie eine erste und zweite konturierte Platte, die an der Tragstruktur angebracht sind und die den Sitzteil und den Rückenlehnenteil bilden. Die Tragstruktur umfasst ein erstes und ein zweites seitliches Tragteil, die sich entlang gegenüberliegenden Seiten des Sitzes erstrecken und die miteinander über ein Querteil verbunden sind, das sich entlang der Verbindung zwischen dem Sitzteil und dem Rückenlehnenteil erstreckt.

Aufgabe der Erfindung ist es, eine Sitzschale anzugeben, die einfach herstellbar und vorzugsweise auch einfach ein- und ausbaubar ist. Insbesondere ist es eine Aufgabe der Erfindung, eine Sitzschale anzugeben, bei der ein Sitzpolster auf einfache Weise anbringbar oder austauschbar ist.

Eine oder mehrere dieser Aufgaben werden von der vorliegenden Erfindung in ihrer allgemeinsten Ausprägung oder in einer speziellen Ausführungsform gelöst.

Angegeben wird von der Erfindung eine Sitzschale nach Anspruch 1, aufweisend ein Profilelement mit einem Rückenlehnenbereich und einem davon abgewinkelten Sitzflächenbereich, wobei das Profilelement
- einen ersten, in einem ersten Seitenbereich des Profilelements angeordneten Hohlprofilbereich aufweist, in dem zumindest eine Hohlkammer gebildet ist,
- einen zweiten, in einem zweiten Seitenbereich des Profilelements angeordneten Hohlprofilbereich aufweist, in dem zumindest eine Hohlkammer gebildet ist,
- einen sich in Längsrichtung und in Querrichtung erstreckenden stegförmigen Verbindungsbereich aufweist, der eine Fläche auf einer Vorderseite der Sitzschale bildet und der eine Fläche auf einer Rückseite der Sitzschale bildet, über den der erste Hohlprofilbereich und der zweite Hohlprofilbereich miteinander verbunden sind und über den der erste und der zweite Hohlprofilbereich in Querrichtung voneinander beabstandet sind,
wobei
die Sitzschale in dem ersten Seitenbereich und dem zweiten Seitenbereich jeweils zumindest ein in Längsrichtung verlaufendes Führungselement aufweist, in welches eine Sitzauflage einführbar ist,
und wobei das Profilelement in der Längsrichtung einstückig ausgebildet ist.

Nach einer grundlegenden Idee der Erfindung wird eine Sitzschale aus einem Profilelement bereitgestellt, das Hohlbereiche und einen die Hohlbereiche verbindenden Verbindungsbereich aufweist, wobei der Verbindungsbereich insbesondere in Form eines Steges, insbesondere ohne Hohlbereiche, ausgebildet ist. Die Hohlprofilbereiche sind insbesondere in Randbereichen der Sitzschale bzw. des die Sitzschale bildenden Profilelements angeordnet, insbesondere ein Hohlprofilbereich in einem rechten Randbereich des Profilelements und ein Hohlprofilbereich in einem linken Randbereich des Profilelements, wenn der Blick auf die Vorderseite der Sitzschale fällt. Der Verbindungsbereich, der die beiden Hohlprofilbereiche miteinander verbindet, ist insbesondere in einem mittleren Bereich der Sitzschale bzw. des Profilelements angeordnet. Dieser Aufbau des Profilelements aus Hohlprofilbereichen und einem Verbindungsbereich zwischen den Hohlprofilbereichen ermöglicht eine gute Biegbarkeit des noch nicht verformten Profilelements, um einen Rückenlehnenbereich und einen davon abgewinkelten Sitzflächenbereich zu formen. Zudem wird durch die beschriebene Gestaltung des Profilelements eine hohe Stabilität bei gleichzeitig verringerter Masse erzielt.

Der Rückenlehnenbereich und der Sitzflächenbereich sind tragende Elemente der Sitzschale, d.h. sie tragen und stützen eine Person, die auf der Sitzschale Platz nimmt. Eine nachfolgend noch beschriebene Sitzauflage muss in diesem Sinne nicht tragend oder lastabstützend ausgeführt sein. Eine Sitzauflage kann lediglich die Funktion einer Polsterung aufweisen.

Bei einer Anordnung von Hohlprofilbereichen in Seitenbereichen des Profilelements für die Sitzschale ist es außerdem sehr gut möglich, nachfolgend noch beschriebene Endstücke an dem Profilelement anzubringen und eine sehr gute Fixierung solcher Endstücke zu erreichen. Seitenbereiche der Endstücke können an oder in seitlichen Hohlkammern befestigt werden, während in einem Mittelbereich des Profilelements, der von einem stegförmigen Verbindungsbereich gebildet sein kann, keine Fixierung der Endstücke erfolgen muss. Auch dadurch kann weiteres Gewicht eingespart werden. Wenn Hohlprofilbereiche in Seitenbereichen des Profilelements angeordnet sind, können dadurch verdickte und/oder abgerundete, Seitenränder des Profilelements gebildet werden, was für eine geringere Verletzungsgefahr sorgt, die bei schmalen Rändern oder Kanten höher ist.

Der stegförmige Verbindungsbereich kann eine oder mehrere Ausnehmungen aufweisen. Ausnehmungen führen vorteilhaft zu einer Massereduktion des Profilelements. Eine Ausnehmung kann nicht durchgehend oder durchgehend, von der Vorderseite bis zur Rückseite des stegförmigen Verbindungsbereiches, sein. Durchgehende Ausnehmungen werden in diesem Zusammenhang auch als Durchbrüche bezeichnet. Ausnehmungen können in Form von Löchern gestaltet sein. Beispielsweise ist der stegförmige Verbindungsbereich durch eine Vielzahl Ausnehmungen perforiert. Die Ausnehmungen können durch eine an anderer Stelle noch beschriebene Sitzauflage teilweise oder vollständig verdeckt sein. Weiterhin können Ausnehmungen durch eine Rücken-an-Rücken Anordnung von Sitzschalen und/oder der Anbringung seitlicher Verkleidungsteile verdeckt werden.

Die Sitzschale weist vorzugsweise in dem ersten Seitenbereich und dem zweiten Seitenbereich jeweils zumindest ein in Längsrichtung verlaufendes Führungselement auf, in welches eine Sitzauflage einführbar ist.

Erfindungsgemäß ist das Profilelement zumindest in einer Richtung von einem oberen Rand des Profilelements bis zu einem unteren Rand des Profilelements, welche die Längsrichtung ist, einstückig ausgebildet. Eine solche Sitzschale ist besonders einfach herstellbar, beispielsweise mittels eines Extrusionsschrittes und eines Umformschrittes.

Die Querrichtung ist die Richtung von einem Seitenrand der Sitzschale, beispielsweise dem rechten Seitenrand, zu einem anderen Seitenrand der Sitzschale, beispielsweise dem linken Seitenrand. Der obere Rand ist der obere Rand einer Rückenlehne bzw. eines Rückenlehnenbereiches. Der untere Rand ist der Rand einer Sitzfläche oder eines Sitzflächenbereiches und kann auch als Vorderrand bezeichnet werden. Dort liegt üblicherweise die Kniekehle einer sitzenden Person an. Folgt man der Richtung von dem oberen Rand hin zu dem unteren Rand, also der Längsrichtung, so wird eine Abwinklung oder Kurve durchlaufen, da der Rückenlehnenbereich und der Sitzflächenbereich zueinander abgewinkelt sind.

Die zumindest eine Hohlkammer in dem ersten Seitenbereich und die zumindest eine Hohlkammer in dem zweiten Seitenbereich weist eine Ausdehnung sowohl in Längsrichtung als auch in Querrichtung auf, wobei die Ausdehnung in Längsrichtung vorzugsweise größer ist. In Längsrichtung erstreckt sich die zumindest eine Hohlkammer vorzugsweise von dem oberen Rand des Profilelements bis zu dem unteren Rand des Profilelements, d.h. sie beginnt am oberen Rand und endet am unteren Rand. In Querrichtung erstreckt sich die zumindest eine Hohlkammer nur über einen Teil der Breite der Sitzschale. Die Querrichtung kann allgemein auch als Breitenrichtung bezeichnet werden.

Das Breitenverhältnis von erstem Hohlprofilbereich zu Verbindungsbereich zu zweitem Hohlprofilbereich beträgt beispielsweise zwischen 1:1:1 (1 zu 1 zu 1) und 1:1,5:1 (eins zu 1,5 zu eins), d.h. der erste Hohlprofilbereich, der Verbindungsbereich und der zweite Hohlprofilbereich machen jeweils etwa oder genau ein Drittel der Breite der Sitzschale bzw. des Profilelements aus.

Die Sitzschale ist in Längsrichtung einstückig ausgebildet, d.h. dass das zum Einsatz gelangende Profilelement von dem oberen Rand bis zum unteren Rand, d.h. bis zu dem Vorderrand des Sitzflächenbereiches oder der Sitzfläche, d.h. dort, wo üblicherweise die Kniekehle des Fahrgastes zu liegen kommt, durchgehend und ohne Unterbrechungen ausgeführt ist.

Das Profilelement kann in Längsrichtung und in Querrichtung, d.h. über die Breite des Sitzes, einstückig ausgeführt sein, sodass für die gesamte Sitzschale lediglich ein einziges Hohlprofil zum Einsatz gelangt.

In einer speziellen Ausführungsform ist das Profilelement aus zumindest zwei Teilprofilelementen zusammengesetzt, wobei die zumindest zwei Teilprofilelemente in Längsrichtung einstückig ausgebildet sind. Die Sitzschale kann aus wenigstens zwei in Querrichtung aneinander anschließenden, sich in Längsrichtung erstreckenden Teilprofilelementen gebildet sein, die in Längsrichtung einstückig ausgebildet sind und sich über den Bereich der Sitzfläche und der Rückenlehne erstrecken. Solche Teilprofilelemente können lösbar oder nicht lösbar, insbesondere nicht zerstörungsfrei lösbar, miteinander verbunden sein. Die Verbindung kann eine formschlüssige und/oder stoffschlüssige Verbindung sein. Beispielsweise sind Teilprofilelemente miteinander verschweißt, verklebt oder mit Hilfe von Nieten verbunden.

Das Profilelement kann aus Metall, vorzugsweise Aluminium, oder Kunststoff sein.

Das Profilelement, oder die Teilprofilelemente, ist/sind vorzugsweise durch Strangpressen erhalten.

In einer Ausführungsform der Erfindung weisen der erste und der zweite Hohlprofilbereich zumindest einen in Längsrichtung verlaufenden Steg im Inneren des Hohlprofilbereichs auf. Der Steg trennt Hohlkammern innerhalb des ersten und des zweiten Hohlprofilbereiches derart voneinander, dass die Hohlkammern in Querrichtung zueinander benachbart angeordnet sind. Durch diese Maßnahme wird die Stabilität des Profilelements nochmals verbessert. Wenn ein Hohlprofilbereich einen Steg im Inneren aufweist, so werden innerhalb des Hohlprofilbereichs zwei Hohlkammern gebildet, bei zwei Stegen drei Hohlkammern, bei drei Stegen vier Hohlkammern usw.

Im Allgemeinen weist eine bereits erwähnte Hohlkammer eine Vorderwand auf der Vorderseite der Sitzschale bzw. des Profilelements, eine Rückwand auf der Rückseite der Sitzschale bzw. des Profilelements und Seitenwände auf, durch welche die Hohlkammer seitlich, d.h. in Querrichtung, begrenzt wird. Sofern ein erwähnter Steg vorhanden ist, bildet der Steg eine Seitenwand von zwei benachbarten Hohlkammern. Es ist in einer vorteilhaften Variante der Erfindung vorgesehen, dass der Steg eine größere Dicke bzw. Materialstärke aufweist als die Vorderwand und die Rückwand der Hohlkammern, die durch den Steg voneinander getrennt sind. Eine solche Dimensionierung der Stegdicke bringt einen besonderen Vorteil bei der Herstellung des Profilelements und der Sitzschale. Beispielsweise wird in einem ersten Verfahrensschritt ein Profilelement, beispielsweise einstückig in Längsrichtung und Querrichtung, hergestellt, das in Seitenbereichen jeweils zwei oder mehr Hohlkammern aufweist, die durch einen oder mehrere Stege voneinander getrennt sind. In einem weiteren Verfahrensschritt wird durch eine Umformung ein Sitzflächenbereich von einem Rückenlehnenbereich abgewinkelt. Bei dem Umformungsschritt besteht das Problem einer Formerhaltung des Hohlkammerquerschnitts und einer Formerhaltung des Querschnitts des Profilelements überhaupt. Stege, die eine Dicke aufweisen, die größer ist als eine Dicke der Vorderwand und der Rückwand, erbringen eine Stabilität und bessere Beibehaltung des Querschnitts, auch bezeichnet als Konturbeibehaltung, beim Umformen des Profilelements. Insbesondere werden in einer Biegezone, dort, wo ein Sitzflächenbereich von einem Rückenlehnenbereich abgewinkelt wird, Hohlkammern durch eine Umformung nicht oder nur wenig verengt.

In einer Ausführungsform der Erfindung weisen der erste und der zweite Hohlprofilbereich außenseitig eine in Längsrichtung verlaufende rinnenförmige Vertiefung auf, deren Verlauf mit dem Verlauf eines erwähnten Steges im Inneren des Hohlprofilbereichs deckungsgleich oder im Wesentlichen deckungsgleich ist. Eine solche rinnenförmige Vertiefung kann auf der Vorderseite und/oder der Rückseite des Hohlprofilbereichs vorgesehen sein. Bei einem erwähnten Umformungsschritt kommt es im Bereich des Verlaufs der erwähnten Stege im Inneren des Hohlprofilbereichs prozessbedingt häufig zu Unregelmäßigkeiten auf der Außenseite des Profilelements, was die Funktion und das Erscheinungsbild des Profilelements und der Sitzschale beeinträchtigt. Beispielsweise können unregelmäßig auftretende Ausbuchtungen oder Einbuchtungen auf der Oberfläche auftreten, die weitere Verarbeitungsschritte erschweren, wie beispielsweise das Aufbringen einer Polsterschicht oder das Aufbringen einer rückseitigen Blende oder Ähnlichem. Die rinnenförmige Vertiefung sorgt für eine regelmäßige Oberfläche im Bereich des Stegverlaufs, wodurch Verfahrensschritte zur Behebung von Unregelmäßigkeiten, wie begradigen, schleifen etc. vermieden werden können. Der Begriff Deckungsgleich bedeutet insbesondere, dass die rinnenförmige Vertiefung auf einer Außenseite einer Vorderwand und/oder einer Außenseite einer Rückwand einer Hohlkammer dort verläuft, wo auf der Innenseite der Vorderwand und/oder der Rückwand, also im Inneren der Hohlkammer, der Steg verläuft. Somit ist die rinnenförmige Vertiefung auf einer Außenseite einer Wand einem Steg auf der Innenseite der Wand gegenüberliegend.

In einer Ausführungsform der Erfindung weist die Sitzschale, insbesondere das Profilelement, in dem ersten Seitenbereich und dem zweiten Seitenbereich jeweils ein in Längsrichtung verlaufendes Führungselement auf, in welches eine Sitzauflage einführbar ist. Das Führungselement ist insbesondere am Rand des Profilelements angeordnet, vorzugsweise am rechten und am linken Rand. Das Führungselement ist insbesondere schienenförmig oder nutförmig, anders ausgedrückt als Führungsschiene oder Führungsnut, ausgebildet. Das Führungselement ist insbesondere einstückig mit einem genannten Profilelement, oder mit einem Teilprofilelement. Das Führungselement wird insbesondere bei Extrusion eines Profilelements oder mit eines Teilprofilelements erhalten.

Eine Sitzauflage, insbesondere eine flächig ausgeprägte Sitzauflage, kann mit Seitenrändern in die Führungselemente einführbar oder einschiebbar sein. Das Führungselement kann sich entlang eines gesamten Seitenbereichs, insbesondere entlang eines gesamten Seitenrands der Sitzschale, insbesondere entlang eines gesamten Seitenrandes des Hohlprofilelements, erstrecken. Das Führungselement hat dann in Längsrichtung vorzugsweise die Kontur bzw. den Verlauf, den die Sitzschale aufweist. Das Führungselement ist somit in einem Übergangsbereich von Lehne zu Sitzfläche gekrümmt.

In dem ersten Seitenbereich und dem zweiten Seitenbereich kann ein in Längsrichtung verlaufendes Führungselement auf der Vorderseite der Sitzschale, insbesondere des Profilelements selbst, und/oder auf der Rückseite der Sitzschale, insbesondere des Profilelements, vorgesehen sein. Führungselemente auf der Vorderseite dienen insbesondere zur Anbringung einer Sitzauflage. Führungselemente auf der Rückseite dienen insbesondere zur Anbringung von Verblendungen, Werbeträgern, Getränkehaltern, Ablagefächern oder Ähnlichem.

In einer speziellen Variante weisen die Führungselemente jeweils einen die Sitzauflage auf einer Vorderseite teilweise überlappenden Schenkel auf. Dieser Schenkel kann Teil einer bereits erwähnten Führungsnut, als spezielle Ausprägung eines Führungselements, sein. Ein solcher Schenkel hat den Vorteil, dass Breitentoleranzen einer Sitzschale oder eines Profilelements ausgeglichen werden können. Beispielsweise weist eine Sitzschale oder ein Profilelement im Vergleich zur festen Breite einer einzubringenden Sitzauflage eine schwankende Breite auf. Diese schwankende Breite, welche durch den Herstellungsprozess bedingt sein kann, wird dadurch ausgeglichen, dass Seitenränder der Sitzauflage durch die erwähnten überlappenden Schenkel überdeckt werden. Ein weiterer Vorteil ist, dass durch einen überlappenden Schenkel eine Sitzauflage am Rand an der Sitzschale festgehalten wird. Es sind keine Halte-, Führungs- oder Verbindungselemente an der Sitzauflage erforderlich, die mit der Sitzschale oder den Führungselementen zusammenwirken müssten, um die Sitzauflage an der Sitzschale zu befestigen.

In vorangehend genannter Variante mit überlappenden Schenkel wird die Sitzauflage an ihren seitlichen Rändern von dem Führungselement eingefasst. Wenn das Führungselement nutförmig ausgeführt ist, kann ein Schenkel der Nut einen Seitenrand der Sitzauflage überdecken. Die Führungsnut kann beispielsweise L- oder C-förmig ausgebildet sein und ein Schenkel der L-Form oder der C-Form kann die Sitzauflage am Rand überlappen.

Gegenstand der Erfindung ist auch eine Sitzschale wie vorangehend beschrieben, die eine Sitzauflage, welche vorangehend bereits erwähnt und nachfolgend noch beschrieben ist, aufweist.

Gegenstand der Erfindung ist auch eine Sitzauflage wie hierin beschrieben. Gegenstand der Erfindung sind ferner Verfahren zur Herstellung der hierin beschriebenen Sitzauflage.

Die Sitzauflage weist in einer Ausführungsform der Erfindung eine elastische, flächig ausgebildete Schicht auf oder ist aus dieser Schicht gebildet oder im Wesentlichen gebildet. Durch die flächige Ausbildung der Schicht ist die Sitzauflage besonders vorteilhaft in bereits erwähnte Führungselemente einführbar. Beispielsweise gibt die Schicht der Sitzauflage, bevor sie mit einer Sitzschale verbunden wird, eine flächige ebene Form. Beim Einführen der Sitzauflage in die Führungselemente wird die Sitzauflage abgewinkelt, da auch der Sitzflächenbereich von dem Rückenlehnenbereich der Sitzschale abgewinkelt ist. Die Abwinklung wird durch die Elastizität der Schicht ermöglicht. Andererseits hat die Elastizität der Schicht den Vorteil, dass die Sitzauflage in gleicher Weise, wie sie in die Führungselemente eingeführt wurde, wieder aus den Führungselementen bzw. von der Sitzschale oder dem Profilelement entnehmbar ist. Durch die Elastizität der Schicht nimmt die Sitzauflage nach dem Entnehmen wieder die Ursprungsform, insbesondere eine ebene Form, ein. Dadurch kann die Sitzauflage sehr gut entnommen und beispielsweise sehr gut gereinigt werden, falls erforderlich. D

Die Schicht ist beispielsweise aus Kunststoff oder Metall.

Die Schicht kann einseitig oder beidseitig (Vorderseite, Rückseite) gefärbt sein, oder durch die ganze Schicht hindurch durchgefärbt sein. Die Schicht kann einseitig oder beidseitig bedruckt sein. Eine Färbung oder Bedruckung kann über die gesamte Oberfläche der Schicht aufgebracht sein oder nur über einen Teil davon.

Die Schicht kann ein Trägermaterial sein bzw. die Funktion eines Trägermaterials haben, an dem weitere Komponenten der Sitzauflage angebracht sein können. Auf ein Trägermaterial kann eine Textilschicht, eine Polsterschicht, ein Gewebe, eine Flockschicht oder eine Kombination davon einseitig oder beidseitig, und über einen Teil der Oberfläche des Trägermaterials oder über die gesamte Oberfläche aufgebracht sein. Die Sitzauflage kann aus einem solchen Trägermaterial mit aufgebrachter Textilschicht, Polsterschicht, aufgebrachtem Gewebe, oder Flockschicht gebildet oder im Wesentlichen gebildet sein. In anderen Varianten kann das Trägermaterial einseitig oder beidseitig, und über einen Teil der Oberfläche des Trägermaterials oder über die gesamte Oberfläche, lackiert oder mit einer Folie beschichtet sein. Die Sitzauflage kann aus einem solchen Trägermaterial mit Lackschicht oder Folienschicht gebildet oder im Wesentlichen gebildet sein.

Die Sitzauflage ist insbesondere einstückig. Eine einstückige Sitzauflage ist vorzugsweise so dimensioniert, dass sie sich in Einbaulage in Längsrichtung entlang der gesamten Sitzschale, d.h. über den Lehnenbereich und den Sitzflächenbereich erstreckt. Eine einstückige Sitzauflage kann als Ganzes in die Führungselemente eingeführt werden und die beschriebene Einbaulage einnehmen.

Von der Erfindung wird in einer Ausführungsform eine Sitzschale angegeben, aufweisend zumindest ein Befestigungsmittel für die Sitzschale, das an der Rückseite der Sitzschale, insbesondere an der Rückseite des Profilelements, angeordnet ist. Ein solches Befestigungsmittel ist ausgebildet zur Befestigung der Sitzschale, insbesondere des Profilelements, an einem Träger. Das Befestigungsmittel kann mit weiteren Befestigungsmitteln, die nicht zwingend Teil der Sitzschale sein müssen oder bereits an der Sitzschale angebracht sein müssen, zusammen wirken, um die Sitzschale zu befestigen. Einige Beispiele für ein Befestigungsmittel sind ein Loch, durch welches als weiteres Befestigungsmittel eine Schraube führbar ist, ein Zapfen, der ein Gewinde aufweisen kann, ein Haken, eine Schiene, beispielsweise eine C-Schiene. Ein Haken oder eine Schiene können mit einem oder mehreren weiteren Befestigungsmitteln, eine formschlüssige Verbindung zwecks Sitzbefestigung bilden.

Das Befestigungsmittel kann im Rückenlehnenbereich und/oder im Sitzflächenbereich des Profilelements angeordnet sein. In einer bevorzugten Variante ist das Befestigungsmittel im Rückenlehnenbereich angeordnet. Dadurch das in Längsrichtung einstückig ausgebildete Profilelement, und die damit erhaltene Stabilität, kann das Profilelement und damit auch die Sitzschale vorteilhaft freischwebend im Bereich der Rückenlehne befestigt werden und auf Unterkonstruktionen verzichtet werden.

Gegenstand der Erfindung ist ferner eine Anordnung aus einer Sitzschale und einem Träger, an dem die Sitzschale befestigt ist (Befestigungsträger), insbesondere im Bereich der Rückenlehne. Der Begriff Träger beinhaltet unabhängig von der konkreten Form jegliches strukturelle Element, an dem eine Sitzschale befestigt werden kann. Ein Träger kann ein Unterbauträger sein, zur Befestigung im Bereich der Sitzfläche, ein rückseitiger Träger, zur Befestigung im Bereich der Rückenlehne, oder eine Kombination davon.

In einer Ausführungsform der Erfindung weisen der erste Hohlprofilbereich und der zweite Hohlprofilbereich jeweils zumindest eine Öffnung auf der Rückseite der Sitzschale auf, durch welche die Hohlkammer im Inneren des Hohlprofilbereichs zugänglich ist und durch welche ein Befestigungselement führbar ist, mit dem die Sitzschale befestigbar ist, beispielsweise an einem Träger. Eine solche Öffnung ist ein spezieller Fall eines oben erwähnten Befestigungsmittels. Diese Ausbildung der Erfindung hat den Vorteil, dass ein Befestigungselement in die Hohlkammer hineinragt, insbesondere in der Hohlkammer endet, wodurch die Vorderseite der Sitzschale, insbesondere des Profilelements, von dem Befestigungselement unbeeinträchtigt bleibt. Die Öffnung ist vorzugsweise als Langloch ausgebildet. Hierdurch wird ein Toleranzausgleich ermöglicht. Beispielsweise können Toleranzen in der Dimension des Profilelements, beispielsweise der Breite des Profilelements, die uneinheitlich sein kann, oder Toleranzen eines Trägers, an dem die Sitzschale befestigt werden soll, ausgeglichen werden.

Es kann bei dieser Ausführungsform mit einer rückseitigen Öffnung ein Befestigungselement wie erwähnt im Hohlraum untergebracht werden, wodurch die Oberfläche der Sitzschale bzw. des Profilelements unbeeinträchtigt bleibt. Ein weiterer Vorteil ist, dass keine Befestigungselemente verwendet werden müssen, die bündig mit der Oberfläche der Sitzschale bzw. des Profilelements abschließen, beispielsweise ein Verbindungselement mit einem Senkkopf. Bei einem solchen, bündig abschließenden Verbindungselement wäre der erwähnte Toleranzausgleich durch Verwendung eines Langlochs nicht möglich, da eine Verwendung von versenkten Verbindungselementen in Verbindung mit Langlöchern aus Stabilitätsgründen unvorteilhaft ist (das Langloch müsste beispielsweise angeschrägt ausgeführt sein) und/oder weil ein versenktes Verbindungselement eine zentrierende Wirkung hat, also die Sitzschale in eine bestimmte Position zwingt, wodurch gerade kein Toleranzausgleich möglich ist.

In einer noch speziellen Variante weisen der erste Hohlprofilbereich und der zweite Hohlprofilbereich jeweils zumindest eine Öffnung auf der Vorderseite der Sitzschale auf, die der erwähnten Öffnung auf der Rückseite, durch welche ein Befestigungselement führbar ist, gegenüberliegt und durch welche die Hohlkammer im Inneren des Hohlprofilbereichs zugänglich ist. Durch diese Maßnahme wird ein Befestigungselement, das durch die Öffnung auf der Rückseite führbar ist oder geführt wird, durch die Öffnung auf der Vorderseite zugänglich, beispielsweise für ein Werkzeug. Durch die Öffnung auf der Vorderseite kann ein Befestigungselement auch in die Hohlkammer eingebracht und anschließend durch die Öffnung auf der Rückseite geführt werden. Mit dem Werkzeug kann das Befestigungselement, beispielsweise eine Schraube, an einem Träger zur Befestigung der Sitzschale befestigt werden.

In einer Ausführungsform der Erfindung weist die Sitzschale ein erstes Endstück auf, das am oberen Rand des Profilelements angebracht ist, und ein zweites Endstück, das am unteren Rand des Profilelements angebracht ist, wobei das erste und/oder das zweite Endstück einen Schenkel aufweisen, der eine auf der Vorderseite der Sitzschale anbringbare oder angebrachte Sitzauflage teilweise überlappt. Ein Endstück dient dem Abschluss des Profilelements und verdeckt Hohlkammeröffnungen. Ein Endstück erstreckt sich vorzugsweise über die gesamte Breite des Profilelements. Das erste und/oder das zweite Endstück ist/sind insbesondere so ausgebildet, dass in Zusammenwirkung mit der Sitzschale eine Nut am unteren Rand und/oder oberen Rand des Profilelements gebildet wird oder das Endstück eine Nut aufweist. In eine solche Nut kann die Sitzauflage eingeführt werden und wird die Sitzauflage am unteren und/oder oberen Rand der Sitzschale gehalten. Das erste Endstück und das zweite Endstück stellen in dieser Ausführungsform somit eine Einfassung der Sitzauflage an einem unteren Rand der Sitzschale und an einem oberen Rand der Sitzschale bereit, bzw. sie ermöglichen die Einfassung eines oberen Randes der Sitzauflage und eines unteren Randes der Sitzauflage. Zusammen mit seitlichen Nuten, die durch bereits beschriebene Führungselemente gebildet sein können, können Nuten am unteren und/oder oberen Rand eine umlaufende Nut bilden, in welche Seitenränder der Sitzauflage eingeführt sind oder einführbar sind.

Eines der Endstücke, das erste oder das zweite, kann so angebracht sein, dass die Befestigung an dem Profilelement durch manuelle Einwirkung zerstörungsfrei lösbar ist. Dadurch kann ein leichterer Austausch einer Sitzauflage, beispielsweise durch Abnehmen des Endstücks und Herausziehen der Sitzauflage, und entsprechend ein leichterer Austausch oder eine leichtere Wiedereinführung der gleichen oder einer anderen Sitzauflage ermöglicht werden. Das jeweils andere Endstück kann so fixiert sein, dass es nicht manuell und/oder nicht ohne Zerstörung lösbar ist.

In einer Ausführungsform weist die Sitzschale, insbesondere das Profilelement, an einem Seitenrand oder an beiden Seitenrändern eine sich in Längsrichtung erstreckende Nut auf. In eine solche Nut kann ein Abdeckelement eingeführt werden, das den Seitenrand abdeckt, beispielsweise eine Verblendung. Alternativ können bei benachbarten Sitzschalen in gegenüberliegenden Nuten an Seitenrändern ein Verbindungsstück eingeführt werden, das benachbarte Sitzschalen miteinander verbindet. Mit einem solchen Verbindungselement kann ein Spalt zwischen zwei benachbarten Sitzschalen geschlossen oder verdeckt werden.

In einer Ausführungsform der Erfindung weist das Profilelement ein Verhältnis von Breite zu Dicke, auch bezeichnet als Tiefe, von 19:1 bis 25:1. auf. Durch ein solches Verhältnis wird ein Optimum an Festigkeit bei gleichzeitiger Umformbarkeit des Profilelements erreicht. Die Dicke des Profilelements ist in diesem Fall die Dicke (auch bezeichnet als Tiefe) der Hohlprofilbereiche.

Gegenstand der Erfindung ist auch ein Sitz, insbesondere ein Fahrzeugsitz, der eine vorangehend beschriebene Sitzschale aufweist. Der Sitz ist insbesondere ein Sitz für ein öffentliches Verkehrsmittel, wie ein Schienenfahrzeug oder ein Bus, ein Sitz für eine Haltestelle, ein Sitz für einen Warteraum oder ein Sitz für die allgemeine öffentliche Verwendung, der in einem öffentlichen Bereich aufgestellt oder angebracht werden kann.

Gegenstand der Erfindung ist auch ein Schienenfahrzeug, das die beschriebene Sitzschale oder den erwähnten Sitz aufweist. Ein Schienenfahrzeug ist insbesondere ein Fahrzeug zur Beförderung von Personen, welches auf mindestens einer Schiene fährt und/oder durch mindestens eine Schiene geführt wird. Ein Schienenfahrzeug ist insbesondere ein Fernverkehrszug, ein Nahverkehrszug, eine S-Bahn, eine U-Bahn oder eine Straßenbahn. Ein Schienenfahrzeug kann eine Sonderform aufweisen, beispielsweise eine Einschienenbahn (Monorail) sein.

Gegenstand der Erfindung ist weiterhin ein Verfahren zur Herstellung einer Sitzschale, aufweisend die Schritte:
a) Herstellen eines sich gerade erstreckenden Profilelements, aufweisend:
   - einen ersten, in einem ersten Seitenbereich des Profilelements angeordneten Hohlprofilbereich, in dem zumindest eine Hohlkammer gebildet ist,
   - einen zweiten, in einem zweiten Seitenbereich des Profilelements angeordneten Hohlprofilbereich, in dem zumindest eine Hohlkammer gebildet ist,
   - einen sich in Längsrichtung und in Querrichtung erstreckenden stegförmigen Verbindungsbereich, über den der erste und der zweite Hohlprofilbereich miteinander verbunden sind und über den der erste und der zweite Hohlprofilbereich in Querrichtung voneinander beabstandet sind,
   wobei das Profilelement in der Längsrichtung einstückig ausgebildet wird,
b) Umformen des Profilelements zu einer Sitzschale, wobei bei dem Umformen ein Rückenlehnenbereich und ein davon abgewinkelter Sitzflächenbereich gebildet werden.

Mit diesem Verfahren oder speziellen Ausprägungen dieses Verfahrens kann eine vorangehend bereits beschriebene Sitzschale hergestellt werden. Hierzu wird auf alle vorangehend beschriebenen strukturellen und verfahrensmäßigen Merkmale Bezug genommen. Diese können Gegenstand eines Verfahrensproduktes oder von Verfahrensschritten sein.

Insbesondere wird beim Herstellen des sich gerade erstreckenden Profilelements, in dem ersten Seitenbereich und dem zweiten Seitenbereich jeweils zumindest ein in Längsrichtung verlaufendes Führungselement gebildet, in das später eine Sitzauflage eingeführt werden kann. Führungselemente und Sitzauflage sind vorangehend beschrieben.

Das sich gerade erstreckende Profilelement wird vorzugsweise durch ein Strangpressverfahren hergestellt. Es kann ein einstückiges Profilelement durch ein Strangpressverfahren hergestellt werden oder es können mehrere Teilprofilelemente durch Strangpressen hergestellt werden und aneinander gefügt werden, um das Profilelement herzustellen.

Das Umformen erfolgt vorzugsweise durch Kaltumformen oder durch Warmumformen, wobei Kaltumformen bevorzugt ist. Ein beispielhaftes Umformungsverfahren ist Rollbiegen.

Nachfolgend wird die Erfindung anhand von Ausführungsbeispielen beschrieben. Es zeigen:
- Fig. 1: eine erfindungsgemäße Sitzschale in verschiedenen Ansichten,
- Fig. 2: einen Querschnitt durch eine erfindungsgemäße Sitzschale entlang der Querrichtung,
- Fig. 3: eine Teilansicht einer Sitzschale in einem Längsschnitt und
- Fig. 4a, 4b: eine Anordnung aus Sitzschalen und Trägern.

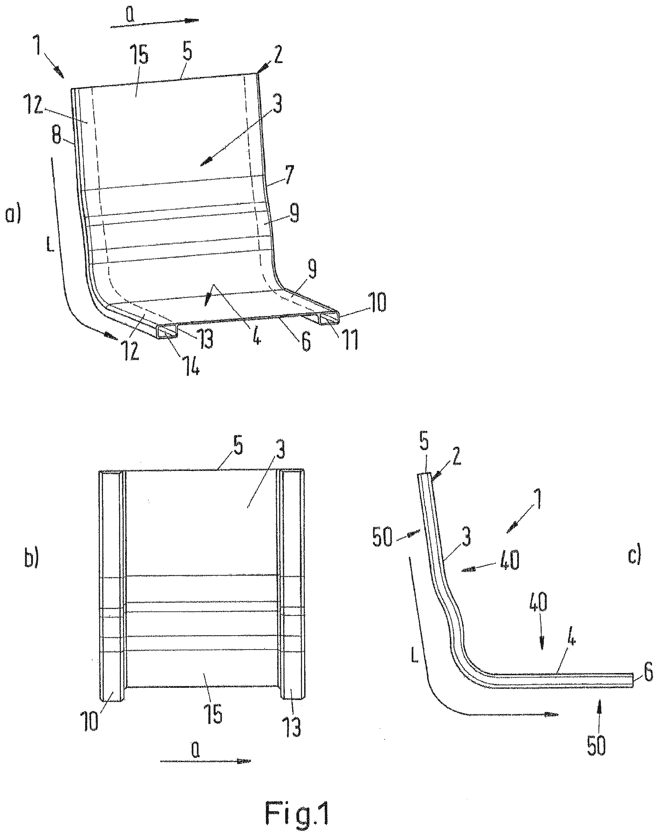

Die Sitzschale 1 in Fig. 1a weist ein Profilelement mit einem Rückenlehnenbereich 3 und einem abgewinkelten Sitzflächenbereich 4 auf. Die Längsrichtung L verläuft von dem oberen Rand 5 bis zu dem unteren Rand 6 des Profilelements 2. Der obere Rand 5 ist der obere Rand des Rückenlehnenbereiches 3 und der vordere Rand 6 ist der Vorderrand des Sitzflächenbereiches 4. Da die Sitzfläche 4 zu der Rückenlehne 3 gewinkelt ist, hat auch die Längsrichtung L einen gewinkelten Verlauf.

Das Profilelement 2 ist in Längsrichtung L einstückig ausgebildet. Die in Querrichtung Q sich erstreckenden eingezeichneten Linien auf der Rückenlehne 3 und der Sitzfläche 4 deuten lediglich Bereiche unterschiedlicher Krümmung oder Übergangsbereiche zwischen Bereichen verschiedener Krümmung an. Es handelt sich hierbei nicht um Verbindungsnähte. Das Profilelement 2 ist beispielsweise in einem Stück extrudiert oder stranggepresst und wurde anschließend in die gezeigte Form einer Sitzschale gebogen. Die Fig. 1c zeigt eine seitliche Ansicht der Sitzschale 1 und es sind die verschiedenen Krümmungsbereiche daraus gut ersichtlich.

In der Fig. 1a sind weiterhin ein rechter Seitenrand 7 und ein linker Seitenrand 8 der Sitzschale 1 bzw. des Profilelements 2 gezeigt. Auf der rechten Seite der Sitzschale 1 befindet sich ein erster Seitenbereich 9 mit dem Hohlprofilbereich 10. Die Abgrenzung des ersten Seitenbereichs 9 bzw. des ersten Hohlprofilbereiches 10 ist mit einer gestrichelten Linie eingezeichnet. In dem ersten Hohlprofilbereich 10 ist eine Hohlkammer 11 gebildet, die sich vom oberen Rand 5 bis zum unteren, vorderen Rand 6 erstreckt.

Auf der aus Sicht des Betrachters linken Seite der Sitzschale 1 ist ein zweiter Seitenbereich 12 vorhanden, der den zweiten Hohlprofilbereich 13 und die darin gebildete Hohlkammer 14 aufweist. Auch dieser zweite Seitenbereich 12 ist durch eine gestrichelte Linie angedeutet. In diesem Ausführungsbeispiel ist das gesamte Profilelement 2 einstückig, sowohl in Längsrichtung L als auch in Querrichtung Q. Auch die gestrichelten Linien, die zur Abgrenzung der Seitenbereiche dienen, sind also nur gedachte Linien und stellen keine Verbindungsnähte, Schweißnähte oder Ähnliches dar.

Zwischen dem ersten Seitenbereich 9 und dem zweiten Seitenbereich 12 ist der Verbindungsbereich 15 angeordnet. Der Verbindungsbereich 15 hat, wie auch die Seitenbereiche 9, 10, eine Ausdehnung in Längsrichtung L und in Querrichtung Q. Auf der Vorderseite 40 der Sitzschale 1 (siehe Fig. 1c), die dem Betrachter in der Fig. 1a zugewandt ist, bildet der Verbindungsbereich 15 eine Fläche, die sich über den Großteil des Sitzflächenbereichs 4 und den Großteil des Rückenlehnenbereiches 3 erstreckt. In diesem Ausführungsbeispiel macht der Verbindungsbereich 15 den Großteil des Sitzflächenbereichs 4 und den Großteils des Rückenlehnenbereiches 3 aus. Der erste Hohlprofilbereich 9 und der zweite Hohlprofilbereich 12 sind mittels des Verbindungsbereichs 15 verbunden, wobei wie bereits oben gesagt, das Profilelement 2 einstückig ausgeführt ist und somit keine Verbindungsstellen oder Verbindungsnähte zwischen Verbindungsbereich 15 und Seitenbereichen 9, 12 existieren. Auch die Hohlprofilbereiche 10, 13, die die Seitenbereiche 9, 12 in diesem Beispiel ausmachen, sind über den Verbindungsbereich 15 miteinander in analoger Weise verbunden.

In Fig. 1b ist der Rückenlehnenbereich 3 der Sitzschale 1 von hinten dargestellt, sodass die Sitzschale 1 im Bereich der Rückenlehne von der Rückseite 50 zu sehen ist. Zu sehen ist, dass der Verbindungsbereich 15 auch auf der Rückseite der Sitzschale 1 eine Fläche bzw. einen flächigen Bereich bildet. Im Gegensatz zu den Hohlprofilbereichen 10, 13 ist der Verbindungsbereich 15 stegförmig ausgebildet, wobei dieser Verbindungssteg 15 Biegungen aufweist, wie auch aus Fig. 1c ersichtlich.

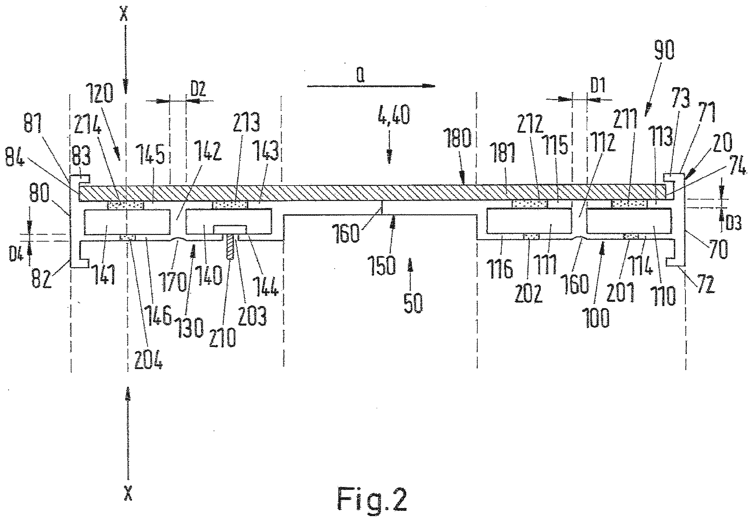

Das in Fig. 2 gezeigte Profilelement 20 einer Sitzschale ist in einer Querschnittsansicht gezeigt, wobei ein Schnitt in Querrichtung Q durch einen Sitzflächenbereich 4 vorgenommen wurde. Mit der Rückseite/Unterseite 50 wird die Sitzschale an einem Träger befestigt. Der erste Hohlprofilbereich 100 ist über den stegförmigen Verbindungsbereich 150 mit dem zweiten Hohlprofilbereich 130 verbunden. Das Profilelement 20 ist in diesem Ausführungsbeispiel zweiteilig ausgeführt und aus zwei spiegelsymmetrischen Teilen an der Verbindungsnaht 160, die beispielsweise eine Schweißnaht ist, zusammengesetzt. Die beiden, in diesem Beispiel spiegelsymmetrischen Teile schließen in Querrichtung Q an der Verbindungsnaht 160 aneinander an. Die Verbindungsnaht 160 erstreckt sich von einem oberen Rand 5 bis zu einem unteren, vorderen Rand 6, die in Fig. 1a gezeigt sind. In Längsrichtung L sind die beiden spiegelsymmetrischen Teile des Profilelements einstückig, beispielsweise in einem Stück stranggepresst. Die Hohlprofilbereiche 100, 130 und der stegförmige Verbindungsbereich 150 sind durch gestrichelte Linien voneinander zeichnerisch getrennt.

Der Hohlprofilbereich 100 weist die Hohlkammern 110, 111 auf. Der Hohlprofilbereich 130 weist die Hohlkammern 140, 141 auf. Die Hohlkammern 110, 111, 140 und 141 erstrecken sich von einem oberen Rand 5 bis zu einem unteren Rand 6, wie auch die Hohlkammern 11 und 14 im Ausführungsbeispiel der Fig. 1a.

In dem Hohlprofilbereich 100 sind die Hohlkammern 110 und 111 durch den Steg 112 voneinander getrennt. In analoger Weise sind in dem Hohlprofilbereich 130 die Hohlkammern 140 und 141 durch den Steg 142 voneinander getrennt. Die Hohlkammern 110 und 111 sind dadurch in Querrichtung Q zueinander benachbart angeordnet. Ebenfalls sind die Hohlkammern 140, 141 in Querrichtung Q benachbart zueinander angeordnet.

Die Hohlkammer 110 weist die Vorderwand 113 und die Rückwand 114 auf. Die Hohlkammer 111 weist die Vorderwand 115 und die Rückwand 116 auf. Der Steg 112 ist dicker als die Vorderwände 113, 115 und dicker als die Rückwände 110, 111. Dadurch wird beim Biegen des Profilteils 20 im Bereich des Übergangs zwischen Sitzfläche und Rückenlehne eine sehr gute Formerhaltung der Hohlkammern 110, 111 erzielt. In analoger Weise weist der Steg 142 eine größere Dicke auf als die Vorderwände 143, 145 und eine größere Dicke als die Rückwände 144, 146 der Hohlkammern 140 und 141. Die Dicke des Steges 112 ist mit D1 bezeichnet und die Dicke des Steges 142 mit D2. Beispielhaft ist die Dicke der Vorderwände 113, 115 mit D3 bezeichnet, die auch die Dicke der Vorderwände 143 und 145 ist. Die Dicke der Rückwände 114, 116, 144, 146 ist mit D4 bezeichnet.

In Fig. 2 ist dargestellt, dass der erste Hohlprofilbereich 100 und der zweite Hohlprofilbereich 130 außenseitig, in diesem Fall auf der Unterseite des Sitzteiles, eine in Längsrichtung, d.h. hier in Blickrichtung des Betrachters, verlaufende rinnenförmige Vertiefung 160, 170 aufweisen. Der Verlauf der rinnenförmigen Vertiefung 160 korrespondiert mit dem Verlauf des Steges 112 und der Verlauf der rinnenförmigen Vertiefung 170 korrespondiert mit dem Verlauf des Steges 142. Der Verlauf des Steges bzw. der rinnenförmigen Vertiefung erstreckt sich in diesem Beispiel von einem oberen Rand 5 bis zu einem unteren Rand 6 (siehe Fig. 1a) des Profilelements 20. In der Ansicht der Fig. 2 fällt die Blickrichtung des Betrachters auf den unteren vorderen Rand 6. Der Verlauf der Stege 112, 142 und der rinnenförmigen Vertiefungen 160, 170 ist dort abgewinkelt, wo die Sitzfläche 4 in die Lehne 3 übergeht, wie am besten anhand der Fig. 1c zu sehen. Weitere Biegungen oder Kurven im Verlauf können vorhanden sein, wie ebenfalls aus der Fig. 1c ersichtlich. Die rinnenförmigen Vertiefungen 160, 170, die mit dem Verlauf des jeweiligen Steges 112 bzw. 142 deckungsgleich sind, haben die im allgemeinen Beschreibungsteil genannten Vorteile für Stabilität und Fertigung des Profilelements 20.

Fig. 2 zeigt im Seitenbereich 90, in diesem Beispiel am Seitenrand 70, ein Führungselement 71 auf der Vorderseite der Sitzschale bzw. des Profilelements 20, die einem Benutzer zugewandt ist. Auf der gegenüberliegenden Seite ist im Seitenbereich 120, in diesem Beispiel am Seitenrand 80, das Führungselement 81 auf der Vorderseite untergebracht. In die Führungselemente 71, 81 ist die Sitzauflage 180 eingeführt. Im Querschnitt, der in der Fig. 2 gezeigt ist, bilden die Führungselemente 71 und 81 jeweils eine Führungsschiene oder Führungsnut, in welche die Sitzauflage 180 einführbar ist. Beispielsweise kann die Sitzauflage 180 an einem vorderen Rand, wie dem Rand 6 in Fig. 1a, oder an einem oberen Rand, wie dem Rand 5 in Fig. 1a, eingeführt und entlang der Sitzschale in die Führungselemente eingeschoben werden. Die Sitzauflage 180 kann wie in diesem Beispiel gezeigt flächig ausgebildet sein und ein elastisches Kunststoffträgermaterial 181 aufweisen, auf welches eine hier nicht gezeigte Polsterschicht aufgebracht ist. Das Führungselement 71 weist einen die Sitzauflage 180 auf der Vorderseite 40 teilweise überlappenden Schenkel 73 auf. In analoger Weise weist das Führungselement 81 einen überlappenden Schenkel 83 auf. Die Schenkel 73, 83 verdecken zumindest einen Rand der Sitzauflage 180 und verdecken einen Spalt, der zwischen einem Seitenrand 74 und/oder einem Seitenrand 75 der Sitzauflage 180 und dem Profilelement 20 entstehen kann, beispielsweise wenn die Breite des Profilelements 20 toleranzbehaftet ist. Im vorliegenden Beispiel ist ein Spalte zwischen dem Rand 74 und dem Profilelement 20 gezeigt, wobei der Spalt hier der Deutlichkeit halber etwas übertrieben und der Schenkel 73 im Vergleich dazu etwas zu kurz dargestellt ist.

Das Profilelement 20 der Fig. 2 weist außerdem Führungselemente 72 und 82 auf der Rückseite 50 der Sitzschale auf. Im Bereich der Sitzfläche 4 (vergleiche Fig. 1a) ist die Rückseite 50 gleichbedeutend mit der Unterseite, was hier nicht unterschieden wird. Somit erstrecken sich die Führungselemente 72 und 82 entlang der Rückseite der Sitzfläche 4 und entlang der Rückseite der Rückenlehne 3. Die Vorderseite 40 und die Rückseite 50 der Sitzschale 1 sind auch in der Fig. 1c zur Verdeutlichung nochmals eingezeichnet.

Die Führungselemente 72 und 82 sind in ihrem Aufbau analog zu dem Aufbau der Führungselemente 73 und 83 auf der Vorderseite 40. In der Fig. 2 ist gezeigt, dass die Führungselemente 72 und 82 sich auch im Bereich der Sitzfläche 4, auf der Rückseite 50, erstrecken. Stattdessen können Führungselemente 72, 82 auch nur im Bereich der Lehne 3, auf der Rückseite 50 der Lehne 3, angeordnet sein. In die Führungselemente 72, 82 können Verblendungen, Werbeträger, sonstige Funktionselemente, wie Getränkehalter oder Ähnliches, eingebracht werden, vorzugsweise im Bereich der Rückenlehne 3.

In der Fig. 2 sind im Bereich der Sitzfläche 4 (vergleiche Fig. 1a) Öffnungen 201, 202, 203, 204 auf der Rückseite 50 der Sitzschale vorgesehen. Durch die Öffnung 201 ist die Hohlkammer 110 zugänglich, durch die Öffnung 202 die Hohlkammer 111, durch die Öffnung 203 die Hohlkammer 140 und durch die Öffnung 204 die Hohlkammer 141. Die Öffnungen haben die Form von Bohrungen, erstrecken sich also nicht über die gesamte Länge L einer Sitzschale. Die Öffnungen sind somit punktuell im Bereich der Sitzfläche 4 auf der Rückseite 50 des Profilelements 20 vorgesehen.

Beispielhaft ist ein Verbindungselement 210 gezeigt, das durch die Öffnung 203 geführt ist. Mit diesem Verbindungselement 210 und weiteren, durch weitere Öffnungen geführten Verbindungselementen kann die Sitzschale an einem Träger befestigt werden, was hier nicht gezeigt ist. Die Öffnungen 201, 202, 203, 204 können als Langlöcher ausgebildet sein, um Toleranzen gegenüber einem Träger ausgleichen zu können. Langlöcher können in verschiedene Richtungen ausgerichtet sein, beispielsweise in Längsrichtung L, in Querrichtung Q oder eine Mischung davon, also einige Langlöcher mit Ausrichtung in Richtung L und einige Langlöcher mit Ausrichtung in Richtung Q.

Fig. 2 zeigt weitere Öffnungen 211, 212, 213, 214 auf der Vorderseite 40 der Sitzschale, im Bereich der Sitzfläche 4. Die Öffnung 211 auf der Vorderseite 40 liegt der Öffnung 201 auf der Rückseite 50 gegenüber, die Öffnung 212 liegt der Öffnung 202 gegenüber, die Öffnung 213 liegt der Öffnung 203 gegenüber und die Öffnung 214 liegt der Öffnung 204 gegenüber. Durch die Öffnungen 211 bis 214 können Befestigungselemente eingeführt werden. Beispielhaft ist dies anhand des Befestigungselements 210 gezeigt, das zunächst durch die Öffnung 213 in den Hohlraum 140 und anschließend durch die Öffnung 203 hindurchgeführt werden kann. Vor Einbringen einer Sitzauflage 180 sind derart eingeführte Befestigungselemente von der Vorderseite 40 für ein Werkzeug zugänglich, nämlich durch die Öffnungen 211 bis 214. Nach Einführen einer Sitzauflage 180 sind die Öffnungen 211 bis 214 verdeckt. Für Wartungszwecke oder um die Sitzschale zu entfernen kann die Sitzauflage 180 wieder entfernt werden und die Löcher 211 bis 214 wieder zugänglich gemacht werden.

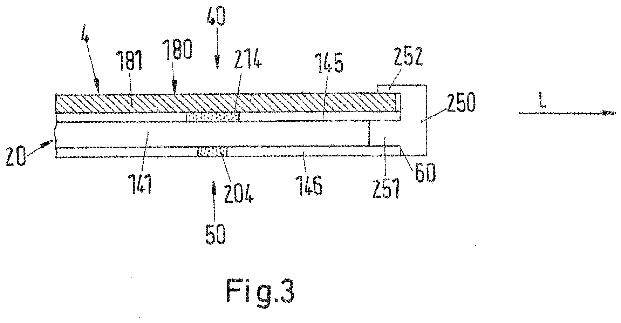

Fig. 3 zeigt einen Teil des Sitzflächenbereiches 4 einer Sitzschale in einem Längsschnitt entlang der Linie X-X in Fig. 2. Der Schnitt geht durch die Hohlkammer 141 und die Öffnungen 204 und 214, die auch links in Fig. 2 gezeigt sind. Im vorderen, unteren Rand 60 des Profilelements 20 ist ein Endstück 250 angesetzt. In analoger Weise ist ein hier nicht gezeigtes Endstück an einem oberen Rand, der analog zu einem Rand 5 in Fig. 1a ist, angesetzt. Das Endstück 250 ist beispielsweise ein Kunststoffteil und ist mit einem Zapfen 251 in die Hohlkammer 141 eingeführt. In analoger Weise weist das Endstück 250 weitere Zapfen auf, die in weitere Hohlkammern 110, 111, 140 (siehe Fig. 2) eingeführt sind. Das Endstück 250 erstreckt sich über die gesamte Breite des Profilelements 20 in Querrichtung Q. Das Endstück 250 weist einen Schenkel 252 auf, der auf der Vorderseite 40 der Sitzschale die Sitzauflage 180 teilweise überlappt, wobei die Überlappung im Randbereich erfolgt. Diese Überlappung ist analog zu der Überlappung des Schenkels 73 und des Schenkels 83 in der Fig. 2. Durch die Überlappung mit dem Schenkel 252 wird die Sitzauflage 180 auch am vorderen, unteren Rand 60 fixiert. Ebenfalls kann ein Toleranzausgleich erfolgen, wenn die Sitzauflage 180 kürzer ist als das Profil 20 in Längsrichtung L.

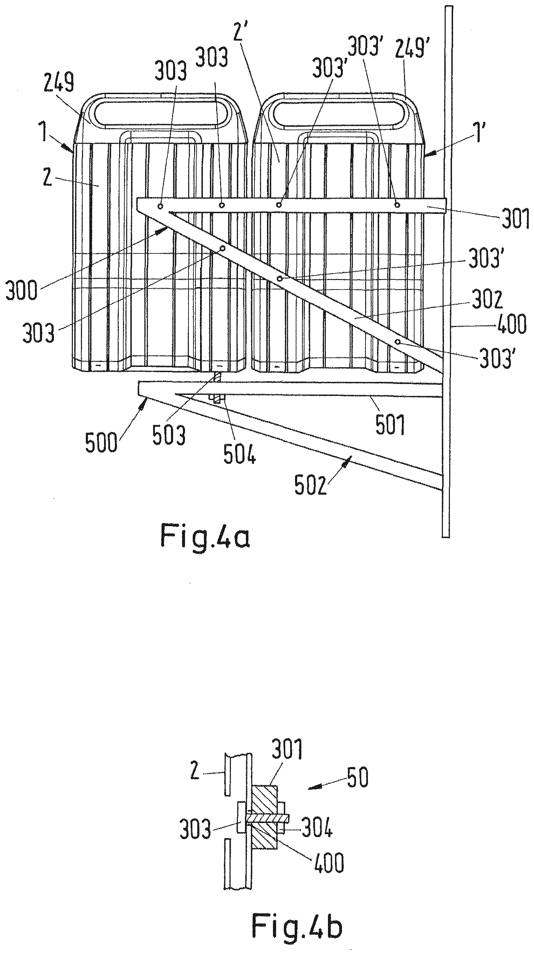

Fig. 4a zeigt eine Anordnung aus Sitzschalen 1,1' und Trägern, an denen die Sitzschalen befestigt sind. Beide Sitzschalen 1,1' weisen Profilelemente 2, 2' und Endstücke 249, 249', die am oberen Rand der Profilelemente angebracht sind, auf. Endstücke am Vorderrand sind in dieser rückseitigen Darstellung nicht sichtbar.

Im Bereich der Rückenlehnen sind beide Sitzschalen 1, 1' über die Profilelemente 2, 2' an dem Träger 300 befestigt, der aus zwei zueinander abgewinkelten Teilen 301 und 302 zusammengesetzt ist, sodass sich mit der Wand 400, an welcher der Träger 300 befestigt ist, eine Dreiecksform ergibt. Die Wand ist beispielsweise die Seitenwand eines Schienenfahrzeug-Wagenkastens.

Die Profilelemente 2, 2' sind mit Schrauben 303, 303' an dem Träger 300 befestigt. Die Schrauben 303, 303' sind beispielsweise in Löcher 400 (Fig. 4b) eingeführt, die in den Profilelementen 2, 2' gebildet sind und die Befestigungsmittel an der Rückseite der Sitzschale darstellen. Die Löcher 400 als Befestigungsmittel wirken mit den Schrauben 303 und Muttern 304 als weiteren Befestigungsmitteln zusammen. Fig. 4b zeigt in seitlicher Ansicht, wie das Profilelement 2 mittels einer Schraube 303, die durch das Loch 400 auf der Rückseite 50 der Sitzschale 1/des Profilelements 2 geführt ist, an dem Trägerteil 301 befestigt ist. Die Art der Befestigung des Profilelements 2 ist analog zu der Befestigung des Profilelements 20 in Fig. 2 mit der dortigen Schraube 210, wobei hier die Befestigung im Rückenlehnenbereich statt im Sitzflächenbereich erfolgt. Die Schraube 303 ist durch eine Bohrung in dem Trägerteil 301 geführt und mit der Mutter 304 befestigt. Die weiteren Befestigungen mit weiteren Schrauben 303, 303' an dem Träger 300 können zumindest in Hohlprofilbereichen analog gestaltet sein.

Der Träger 300 ist ein rückseitiger Träger, zur Befestigung der Sitzschalen 1, 1' im Rückenlehnenbereich. Weiter gezeigt ist ein Träger 500, bestehend aus den Teilträgern 501 und 502, der ein Unterbauträger ist. Der Unterbauträger 500 kann alternativ zu dem Träger 300 verwendet werden, oder zusätzlich zu dem Träger 300 verwendet werden. Beispielhaft ist die Befestigung des Profilelements 2 an dem Träger 500 mit der Schraube 503 und der Mutter 504 gezeigt. Die Art der Befestigung des Profilelements 2 mit der Schraube 503 ist analog zu der Befestigung des Profilelements 20 in Fig. 2 mit der dortigen Schraube 210.

## Patentansprüche

1. Sitzschale (1, 1'), aufweisend
ein Profilelement (2, 2'; 20) mit einem Rückenlehnenbereich (3) und einem davon abgewinkelten Sitzflächenbereich (4), wobei das Profilelement
- einen ersten, in einem ersten Seitenbereich (9; 90) des Profilelements angeordneten Hohlprofilbereich (10; 100) aufweist, in dem zumindest eine Hohlkammer (11; 110, 111) gebildet ist,
- einen zweiten, in einem zweiten Seitenbereich (12; 120) des Profilelements angeordneten Hohlprofilbereich (13; 130) aufweist, in dem zumindest eine Hohlkammer (14; 140, 141) gebildet ist,
- einen sich in Längsrichtung (L) und in Querrichtung (Q) erstreckenden stegförmigen Verbindungsbereich (15; 150) aufweist, der eine Fläche auf einer Vorderseite (40) der Sitzschale bildet und der eine Fläche auf einer Rückseite (50) der Sitzschale (1) bildet, über den der erste Hohlprofilbereich (10; 100) und der zweite Hohlprofilbereich (13; 130) miteinander verbunden sind und über den der erste und der zweite Hohlprofilbereich in Querrichtung (Q) voneinander beabstandet sind,
wobei
die Sitzschale in dem ersten Seitenbereich (90) und dem zweiten Seitenbereich (120) jeweils zumindest ein in Längsrichtung verlaufendes Führungselement (71, 81) aufweist, in welches eine Sitzauflage (180) einführbar ist,
**dadurch gekennzeichnet, dass**
das Profilelement (2, 2'; 20) in der Längsrichtung (L) einstückig ausgebildet ist.

2. Sitzschale nach Anspruch 1, wobei die Führungselemente jeweils einen die Sitzauflage auf einer Vorderseite (40) teilweise überlappenden Schenkel (73, 83) aufweisen.

3. Sitzschale nach einem der vorangehenden Ansprüche, aufweisend eine Sitzauflage (180), die eine elastische, flächig ausgebildete Schicht (181) aufweist, und die in die Führungselemente (71, 81) eingeführt ist.

4. Sitzschale nach einem der vorangehenden Ansprüche, wobei der erste Hohlprofilbereich (100) und der zweite Hohlprofilbereich (130) zumindest einen Steg (112; 142) im Inneren des Hohlprofilbereichs aufweisen, der Hohlkammern (110, 111; 140, 141) innerhalb des ersten und des zweiten Hohlprofilbereichs derart voneinander separiert, dass die Hohlkammern (110, 111; 140, 141) in Querrichtung (Q) zueinander benachbart angeordnet sind.

5. Sitzschale nach Anspruch 4, wobei der Steg (112; 142) eine Dicke (D1, D2) aufweist, die größer ist als eine Dicke einer Vorderwand (113, 115; 143, 145) und die größer ist als eine Dicke einer Rückwand (114, 116; 144, 146) der Hohlkammern (110, 111; 140, 141).

6. Sitzschale nach Anspruch 4 oder 5, wobei der erste Hohlprofilbereich (100) und der zweite Hohlprofilbereich (130) außenseitig eine in Längsrichtung verlaufende rinnenförmige Vertiefung (160, 170) aufweisen, deren Verlauf mit dem Verlauf des Steges (112, 142) im inneren des Hohlprofilbereichs (100, 113) deckungsgleich oder im Wesentlichen deckungsgleich ist.

7. Sitzschale nach einem der vorangehenden Ansprüche, aufweisend zumindest ein Befestigungsmittel (201, 202, 203, 204; 400) für die Sitzschale, das an der Rückseite (50) der Sitzschale (1) oder des Profilelements (2) angeordnet ist.

8. Sitzschale nach Anspruch 7, wobei das Befestigungsmittel (201, 202, 203, 204; 400) im Rückenlehnenbereich (3) und/oder im Sitzflächenbereich (4) der Sitzschale (1) oder des Profilelements (2) angeordnet ist.

9. Sitzschale nach einem der vorangehenden Ansprüche, wobei der erste Hohlprofilbereich (100) und der zweite Hohlprofilbereich (130) jeweils zumindest eine Öffnung (201, 202, 203, 204) auf der Rückseite (50) der Sitzschale aufweisen, durch welche die Hohlkammer (110, 111, 140, 141) im Inneren des Hohlprofilbereichs (100, 130) zugänglich ist und durch die ein Befestigungselement (210) führbar ist, mit welcher die Sitzschale an einem Träger befestigbar ist.

10. Sitzschale nach Anspruch 9, wobei die Öffnung (201, 202, 203, 204) ein Langloch ist.

11. Sitzschale nach einem der Ansprüche 9 oder 10, wobei der erste Hohlprofilbereich und der zweite Hohlprofilbereich jeweils zumindest eine Öffnung (211, 212, 213, 214) auf der Vorderseite (40) der Sitzschale aufweisen, die der Öffnung (201, 202, 203, 204) auf der Rückseite (50) gegenüber liegt und durch welche die Hohlkammer (110, 111, 140, 141) im Inneren des Hohlprofilbereichs zugänglich ist, sodass ein Befestigungselement durch die Öffnung auf der Vorderseite zugänglich ist.

12. Sitzschale nach einem der vorangehenden Ansprüche, aufweisend ein erstes Endstück (249), das an einem oberen Rand (5) des Profilelements angebracht ist und ein zweites Endstück (250), das an einem unteren Rand (6; 60) des Profilelements (20) angebracht ist, wobei das erste Endstück (249) und/oder das zweite Endstück (250) einen Schenkel aufweisen der eine auf der Vorderseite der Sitzschale anbringbare Sitzauflage (180) teilweise überlappt.

13. Sitz, aufweisend eine Sitzschale nach einem der Ansprüche 1-12.

14. Schienenfahrzeug, aufweisend einen Sitz nach Anspruch 13.

15. Verfahren zur Herstellung einer Sitzschale, aufweisend die Schritte:
a) Herstellen eines sich gerade erstreckenden Profilelements, aufweisend:
- einen ersten, in einem ersten Seitenbereich des Profilelements angeordneten Hohlprofilbereich, in dem zumindest eine Hohlkammer gebildet ist
- einen zweiten, in einem zweiten Seitenbereich des Profilelements angeordneten Hohlprofilbereich , in dem zumindest eine Hohlkammer gebildet ist,
- einen sich in Längsrichtung und in Querrichtung erstreckenden stegförmigen Verbindungsbereich, über den der erste und der zweite Hohlprofilbereich miteinander verbunden sind und über den der erste und der zweite Hohlprofilbereich in Querrichtung voneinander beabstandet sind,
- in dem ersten Seitenbereich (90) und dem zweiten Seitenbereich (120) jeweils zumindest ein in Längsrichtung verlaufendes Führungselement (71, 81), zur Einführung einer Sitzauflage (180),
wobei das Profilelement (2, 2'; 20) in der Längsrichtung (L) einstückig ausgebildet wird,
b) Umformen des Profilelements zu einer Sitzschale, wobei bei dem Umformen ein Rückenlehnenbereich und ein davon abgewinkelter Sitzflächenbereich gebildet werden.

## Claims

1. A seat shell (1, 1') having
a profile element (2, 2'; 20) with a backrest region (3) and a seat surface region (4) angled away therefrom, wherein the profile element has
- a first hollow profile region (10; 100), which is arranged in a first side region (9; 90) of the profile element and in which at least one hollow chamber (11; 110, 111) is formed,
- a second hollow profile region (13; 130), which is arranged in a second side region (12; 120) of the profile element and in which at least one hollow chamber (14; 140, 141) is formed,
- a rib-shaped connection region (15; 150), which extends in the longitudinal direction (L) and in the transverse direction (Q) and which forms a surface on a front side (40) of the seat shell (1) and which forms a surface on a rear side (50) of the seat shell (1), via which the first hollow profile region (10; 100) and the second hollow profile region (13; 130) are connected to one another and are distanced from one another in the transverse direction (Q) via the first and the second hollow profile region,
wherein
the seat shell, in each of the first side region (90) and the second side region (120), has at least one guide element (71, 81), which guide elements run in the longitudinal direction and into which a seat cover (180) can be introduced,
**characterised in that**
the profile element (2, 2'; 20) is formed in one piece in the longitudinal direction (L).

2. The seat shell according to claim 1, wherein the guide elements each have a limb (73, 83) partially overlapping the seat cover on a front side (40).

3. The seat shell according to any one of the preceding claims, having a seat cover (180), which has a resilient, planar layer (181) and which is introduced into the guide elements (71, 81).

4. The seat shell according to any one of the preceding claims, wherein the first hollow profile region (100) and the second hollow profile region (130) have at least one rib (112; 142) inside the hollow profile region, which rib separates hollow chambers (110, 111; 140, 141) from one another within the first and the second hollow profile region in such a way that the hollow chambers (110, 111; 140, 141) are arranged adjacently to one another in the transverse direction (Q).

5. The seat shell according to claim 4, wherein the rib (112; 142) has a thickness (D1, D2) that is greater than a thickness of a front wall (113, 115; 143, 145) and that is greater than a thickness of a rear wall (114, 116; 144, 146) of the hollow chambers (110, 111; 140, 141).

6. The seat shell according to claim 4 or 5, wherein the first hollow profile region (100) and the second hollow profile region (130) have, externally, a groove-shaped indentation (160, 170), which runs in the longitudinal direction and the course of which is congruent or substantially congruent with the course of the rib (112, 142) inside the hollow profile region (100, 113).

7. The seat shell according to any one of the preceding claims, having at least one fastening means (201, 202, 203, 204; 400) for the seat shell, which fastening mean is arranged on the rear side (50) of the seat shell (1) or of the profile element (2).

8. The seat shell according to claim 7, wherein the fastening means (201, 202, 203, 204; 400) is arranged in the backrest region (3) and/or in the seat surface region (4) of the seat shell (1) or the profile element (2).

9. The seat shell according to any one of the preceding claims, wherein the first hollow profile region (100) and the second hollow profile region (130) each have at least one opening (201, 202, 203, 204) on the rear side (50) of the seat shell, through which the hollow chamber (110, 111, 140, 141) inside the hollow profile region (100, 130) is accessible and through which a fastening element (210) can be guided, with which the seat shell can be fastened to a carrier.

10. The seat shell according to claim 9, wherein the opening (201, 202, 203, 204) is a slot.

11. The seat shell according to any one of claims 9 or 10, wherein the first hollow profile region and the second hollow profile region each have at least one opening (211, 212, 213, 214) on the front side (40) of the seat shell, which opening is opposite the opening (201, 202, 203, 204) on the rear side (50) and through which the hollow chamber (110, 111, 140, 141) inside the hollow profile region is accessible, such that a fastening element is accessible through the opening on the front side.

12. The seat shell according to any one of the preceding claims, having a first endpiece (249), which is mounted on an upper edge (5) of the profile element, and a second endpiece (250), which is mounted on a lower edge (6; 60) of the profile element (20), wherein the first endpiece (249) and/or the second endpiece (250) have a limb which partially overlaps a seat cover (180) which can be mounted on the front side of the seat shell.

13. A seat having a seat shell according to any one of claims 1-12.

14. A rail vehicle having a seat according to claim 13.

15. A method for producing a seat shell, said method having the following steps:
a) producing a profile element extending in a straight line and having:
- a first hollow profile region, which is arranged in a first side region of the profile element and in which at least one hollow chamber is formed
- a second hollow profile region, which is arranged in a second side region of the profile element and in which at least one hollow chamber is formed,
- a rib-shaped connection region, which extends in the longitudinal direction and in the transverse direction and via which the first and the second hollow profile region are connected to one another and via which the first and the second hollow profile region are distanced from one another in the transverse direction,
- at least one guide element (71, 81) in each of the first side region (90) and the second side region (120), which guide elements run in the longitudinal direction and serve for insertion of a seat cover (180),
wherein the profile element (2, 2'; 20) is formed in one piece in the longitudinal direction (L),
b) shaping the profile element into a seat shell, wherein a backrest region and a seat surface region angled away therefrom are formed during the shaping process.

## Revendications

1. Coque de siège (1, 1') présentant
un élément profilé (2, 2' ; 20) avec une zone de dossier (3) et une zone de surface de siège (4) coudée par rapport à cette dernière, dans laquelle l'élément profilé
- présente une première zone profilée creuse (10 ; 100) disposée dans une première zone latérale (9 ; 90) de l'élément profilé, dans laquelle au moins une chambre creuse (11 ; 110, 111) est formée,
- présente une deuxième zone profilée creuse (13 ; 130) disposée dans une deuxième zone latérale (12 ; 120) de l'élément profilé, dans laquelle au moins une chambre creuse (14 ; 140, 141) est formée,
- présente une zone de liaison (15 ; 150) en forme d'entretoise s'étendant dans la direction longitudinale (L) et dans la direction transversale (Q), qui forme une surface sur un côté avant (40) de la coque de siège (1) et qui forme une surface sur un côté arrière (50) de la coque de siège (1), par l'intermédiaire de laquelle la première zone profilée creuse (10 ; 100) et la deuxième zone profilée creuse (13 ; 130) sont reliées l'une à l'autre et par l'intermédiaire de laquelle la première et la deuxième zone profilée creuse sont espacées l'une de l'autre dans la direction transversale (Q),
dans laquelle
la coque de siège présente, dans la première zone latérale (90) et la deuxième zone latérale (120), respectivement au moins un élément de guidage (71, 81) s'étendant dans la direction longitudinale, dans lequel une housse de siège (180) peut être introduite,
**caractérisée en ce que**
l'élément profilé (2, 2' ; 20) est réalisé d'un seul tenant dans la direction longitudinale (L).

2. Coque de siège selon la revendication 1, dans laquelle les éléments de guidage présentent respectivement une branche (73, 83) chevauchant en partie la housse de siège sur un côté avant (40).

3. Coque de siège selon l'une quelconque des revendications précédentes, présentant une housse de siège (180), qui présente une couche (181) élastique réalisée à plat et qui est introduite dans les éléments de guidage (71, 81).

4. Coque de siège selon l'une quelconque des revendications précédentes, dans laquelle la première zone profilée creuse (100) et la deuxième zone profilée creuse (130) présentent au moins une entretoise (112 ; 142) à l'intérieur de la zone profilée creuse, qui sépare des chambres creuses (110, 111 ; 140, 141) à l'intérieur de la première et de la deuxième zone profilée creuse de telle manière que les chambres creuses (110, 111 ; 140, 141) sont disposées de manière adjacente les unes par rapport aux autres dans la direction transversale (Q).

5. Coque de siège selon la revendication 4, dans laquelle l'entretoise (112 ; 142) présente une épaisseur (D1, D2), qui est plus grande qu'une épaisseur d'une paroi avant (113, 115 ; 143, 145) et qui est plus grande qu'une épaisseur d'une paroi arrière (114, 116 ; 144, 146) des chambres creuses (110, 111 ; 140, 141).

6. Coque de siège selon la revendication 4 ou 5, dans laquelle la première zone profilée creuse (100) et la deuxième zone profilée creuse (130) présentent côté extérieur un renfoncement (160, 170) en forme de rainure s'étendant dans la direction longitudinale, dont le profil coïncide ou coïncide sensiblement avec le profil de l'entretoise (112, 142) à l'intérieur de la zone profilée creuse (100, 113).

7. Coque de siège selon l'une quelconque des revendications précédentes, présentant au moins un moyen de fixation (201, 202, 203, 204 ; 400) pour la coque de siège, qui est disposé au niveau du côté arrière (50) de la coque de siège (1) ou de l'élément profilé (2).

8. Coque de siège selon la revendication 7, dans laquelle le moyen de fixation (201, 202, 203, 204 ; 400) est disposé dans la zone de dossier (3) et/ou dans la zone de surface de siège (4) de la coque de siège (1) ou de l'élément profilé (2).

9. Coque de siège selon l'une quelconque des revendications précédentes, dans laquelle la première zone profilée creuse (100) et la deuxième zone profilée creuse (130) présentent respectivement au moins une ouverture (201, 202, 203, 204) sur le côté arrière (50) de la coque de siège, par laquelle la chambre creuse (110, 111, 140, 141) est accessible dans l'espace intérieur de la zone profilée creuse (100, 130) et par laquelle un élément de fixation (210) peut être guidé, avec laquelle la coque de siège peut être fixée au niveau d'un support.

10. Coque de siège selon la revendication 9, dans laquelle l'ouverture (201, 202, 203, 204) est un trou oblong.

11. Coque de siège selon l'une quelconque des revendications 9 ou 10, dans laquelle la première zone profile creuse et la deuxième zone profilée creuse présentent respectivement au moins une ouverture (211, 212, 213, 214) sur le côté avant (40) de la coque de siège, qui fait face à l'ouverture (201, 202, 203, 204) sur le côté arrière (50) et par laquelle la chambre creuse (110, 111, 140, 141) est accessible dans l'espace intérieur de la zone profilée creuse si bien qu'un élément de fixation est accessible par l'ouverture sur le côté avant.

12. Coque de siège selon l'une quelconque des revendications précédentes, présentant un premier embout (249), qui est installé au niveau d'un bord (5) supérieur de l'élément profilé, et un deuxième embout (250), qui est installé au niveau d'un bord (6 ; 60) inférieur de l'élément profilé (20), dans laquelle le premier embout (249) et/ou le deuxième embout (250) présentent une branche, qui chevauche en partie une housse de siège (180) pouvant être installée sur le côté avant de la coque de siège.

13. Siège présentant une coque de siège selon l'une quelconque des revendications 1 à 12.

14. Véhicule sur rails, présentant un siège selon la revendication 13.

15. Procédé servant à fabriquer une coque de siège, présentant les étapes :
a) de fabrication d'un élément profilé s'étendant de manière rectiligne, présentant :
- une première zone profilée creuse disposée dans une première zone latérale de l'élément profilé, dans laquelle au moins une chambre creuse est formée,
- une deuxième zone profilée creuse disposée dans une deuxième zone latérale de l'élément profilé, dans laquelle au moins une chambre creuse est formée,
- une zone de liaison en forme d'entretoise s'étendant dans la direction longitudinale et dans la direction transversale, par l'intermédiaire de laquelle la première et la deuxième zone profilée creuse sont reliées l'une à l'autre et par l'intermédiaire de laquelle la première et la deuxième zone profilée creuse sont espacées l'une de l'autre dans la direction transversale ;
- dans la première zone latérale (90) et la deuxième zone latérale (120), respectivement au moins un élément de guidage (71, 81) s'étendant dans la direction longitudinale servant à introduire une housse de siège (180),
dans lequel l'élément profilé (2, 2' ; 20) est réalisé d'un seul tenant dans la direction longitudinale (L),
b) de façonnage de l'élément profilé en une coque de siège, dans lequel lors du façonnage, une zone de dossier et une zone de surface de siège coudée par rapport à cette dernière sont formées.
